Europäisches Patentamt

European Patent Office

Office européen des brevets

(11) Veröffentlichungsnummer: **0 441 277 A2**

# (12) EUROPÄISCHE PATENTANMELDUNG

(21) Anmeldenummer: **91101418.1**

(22) Anmeldetag: **01.02.91**

(51) Int. Cl.5: **B60J 3/02**

(30) Priorität: **05.02.90 DE 4003399**

(43) Veröffentlichungstag der Anmeldung:
**14.08.91 Patentblatt 91/33**

(84) Benannte Vertragsstaaten:
**AT BE CH DE DK ES FR GB GR IT LI LU NL SE**

(71) Anmelder: **Müller, Hermann-Frank**
**Reichenhaller Strasse 42**
**W-8000 München 90(DE)**

(72) Erfinder: **Müller, Hermann-Frank**
**Reichenhaller Strasse 42**
**W-8000 München 90(DE)**

(54) **Sonnenblende für Fahrzeuge.**

(57) Bisher wird bei stehendem Fahrzeug und einem oder mehreren eingeschaltem Stromverbrauchern der Akkumulator des Fahrzeugs entladen.

Die neue Sonnenblende ist an ihrer in heruntergeklappter Stellung nach außen weisenden Seite mit Solarmodulen zur Stromerzeugung versehen. In einer Aussparung der Sonnenblende sind ein oder mehrere Akkumulatoren zur Speicherung des von den Solarmodulen gelieferten Stroms vorgesehen. Die Flächer der Sonnenblende ist durch mindestens eine zusätzliche Sonnenblende mit gleichen Eigenschaften vergrößerbar.

Die neue Vorrichtung die eine oder mehrere Sonnenblenden umfaßt, liefert bei stehendem Fahrzeug Strom für beliebige Verbraucher.

Fig.1

EP 0 441 277 A2

# SONNENBLENDE FÜR FAHRZEUGE

Die Erfindung bezieht sich auf eine Sonnenblende für Fahrzeuge mit an einem Endbereich ihres oberen Längsrandes angeordnetem Schwenklager und einer am anderen Endbereich desselben Längsrandes vorgesehenen Aussparung mit dieselbe querender Gegenlagerachse, die lösbar mit einer Halterungseinrichtung verbunden ist sowie mit einer Aussparung in der in heruntergeklappter Stellung nach innen gerichteten Seite der Sonnenblendenfläche eines flachen Bauteils.

Derartige Sonnenblenden, wie sie beispielsweise aus der DE-OS 37 01 760 bekannt sind, weisen in ihrer heruntergeklappten Stellung eine dem Fahrer bzw. dem Fahrgast zugekehrte Aussparung z.B. für einen Spiegel - gegebenenfalls mit Spiegelbeleuchtung - auf.

Der Erfindung liegt die Aufgabe zugrunde, eine Sonnenblende so auszubilden und anzuordnen, daß sie nicht nur ihre übliche Aufgaben als Blendschutz gegen Sonneneinstrahlung und als Hilfseinrichtung z.B. zur Überprüfung der Kosmetik erfüllt, sondern darüberhinaus als Stromerzeuger innerhalb und außerhalb des Fahrzeugs verwendbar ist, ohne sie für die unterschiedlichen Aufgaben umbauen zu müssen.

Erfindungsgemäß wird die Aufgabe durch die im Kennzeichen des Anspruchs 1 aufgeführten Merkmale gelöst.

Die Erfindung weist gegenüber dem Bekannten die Vorteile auf, daß auch bei stehendem Fahrzeug und Sonneneinstrahlung ständig Strom erzeugt wird.

Weitere vorteilhafte Ausgestaltungen der Erfindung gehen aus den Unteransprüchen und der nachfolgenden Beschreibung hervor.

Die Erfindung wird einem Ausführungsbeispiel anhand einer Zeichnung erläutert. Es zeigen

Fig. 1 eine Ansicht einer Sonnenblende mit aufgeklappter, zusätzlicher Sonnenblende,

Fig. 2 einen Querschnitt von Sonnenblende und zusätzlicher Sonnenblende in zusammengeklapptem Zustand.

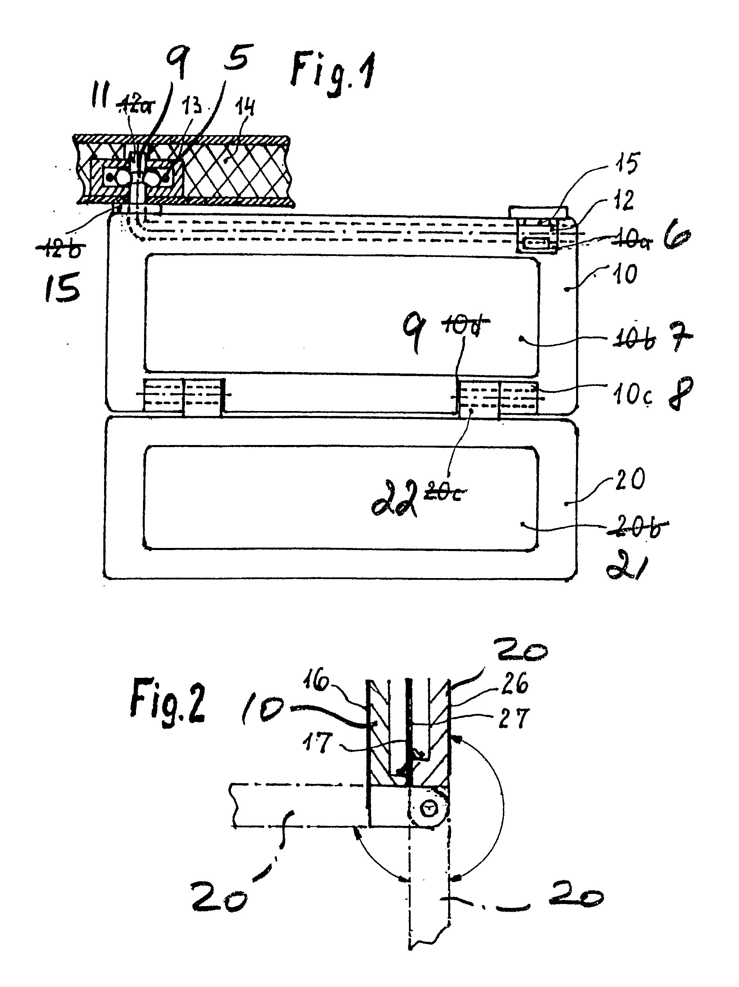

Eine Sonnenblende 10 (Fig. 1) ist durch eine zusätzliche Sonnenblende 20 ergänzt. Die Sonnenblende ist in an sich bekannter Weise entlang ihres oberen Längsrands um eine Stange 12 verschwenkbar. Das eine Ende der Stange 12 ist an deren einem Ende unter Bildung eines Zapfens 11 um 90° abgewinkelt. Der abgewinkelte Zapfen 11 wird bis an einen Flansch 15 in eine Rastbefestigung 13 gesteckt, die in der Fahrzeugdecke 14 vorgesehen ist. Die Rastbefestigung 13 ist so ausgebildet, daß der am Ende der Stange 12 abgewinkelte Zapfen 11 aus der Rastbefestigung 13 herauszieh- und wieder in sie hineinsteckbar ist.

Diese Einrichtung umfaßt beim Ausführungsbeispiel Kugeln 4, die unter der Einwirkung einer Ringfeder 5 in eine Ringnut 9 im abgewinkelten Zapfen 11 am Ende der Stange 12 einrasten.

Am anderen Ende des Längsrandes der Sonnenblende 10 ist in ebenfalls an sich bekannter Weise eine Aussparung 6 vorgesehen, durch die die Stange 12 hindurchragt. Im Bereich dieser Aussparung 6 wird die Stange 12 von einem an der Fahrzeugdecke angebrachten Haken 15 gehalten.

Die Sonnenblende 10 (Fig. 2) weist an ihrer in der heruntergeklappten Stellung nach außen gerichteten Seite Solarmodule 16 auf, die eine unmittelbare Umwandlung von Sonnenlicht in elektrischen Strom ermöglichen. Zur Speicherung dieses elektrischen Stroms sind (in der Zeichnung nicht dargestellte) wiederaufladbare Akkumulatoren vorgesehen, die in einer Aussparung 7 der Sonnenblende 10 angeordnet sind.

Die Aussparung 7 befindet sich an der in heruntergeklappter Stellung nach innen gerichteten Seite der Sonnenblende 10 und wird in an sich bekannter Weise durch einen einrastbaren Deckel 17 (Fig. 2) staub- und feuchtigkeitsdicht abgeschlossen.

Die Sonnenblende 10 ist bei einem Ausführungsbeispiel durch mindestens eine zusätzliche Sonnenblende 20 (Fig. 1, 2) vergrößerbar, die an ihrer in Betriebsstellung nach außen gerichteten Seite Solarmodule 26 (Fig. 2) und an ihrer nach innen gerichteten Seite eine Aussparung 21 mit mindestens einem (in der Zeichnung nicht dargestellten) Akkumulator aufweist. Auch die Aussparung 21 wird in an sich bekannter Weise durch einen einrastbaren Deckel 27 (Fig. 2) staub- und feuchtigkeitsdicht abgeschlossen.

Der Akkumulator bzw. die Akkumulatoren in der zusätzlichen Sonnenblende 20 ist bzw. sind mit den Solarmodulen 26 an der nach außen gerichteten Seite der zusätzlichen Sonnenblende 20 elektrisch verbunden und mit dem Akkumulator bzw. Akkumulatoren der Sonnenblende (10) verbindbar.

Die Sonnenblende 10 (Fig. 1, 2) und die zusätzliche Sonnenblende 20 sind durch ein Scharnier miteinander verbunden, das durch Scharnierteile 8, 22 gebildet ist. Das Scharnierteil 22 ist in einer Aussparung 9 der Sonnenblende 10 angeordnet, so daß die zusätzliche Sonnenblende 20 gegenüber der Sonnenblende 10 um 270° verschwenkbar ist.

Im Gebrauch kann die Sonnenblende 10 den Frontscheibenbereich des Fahrzeugs beschatten, die zusätzliche Sonnenblende 20 kann am Seitenfenster eines Fahrzeugs bleiben. Auf diese Weise braucht man bei Kurvenfahrten die Sonnenblenden 10, 20 nicht ständig zu verstellen, um zu beschatten und Strom zu gewinnen.

Die Solarmodule 16, 26 weisen bei einem Ausführungsbeispiel monokristalline Solarzellen auf.

Die Solarmodule 16, 26 weisen bei einem anderen Ausführungsbeispiel polykristalline Solarzellen auf.

Bei einem weiteren Ausführungsbeispiel weisen die Solarmodule 16, 26 Dünnschicht-Solarmodule auf.

Nach einem Ausführungsbeispiel ist die zusätzliche Sonnenblende 20 aus der Sonnenblende 10 nach unten herausziehbar.

Gemäß einem weiteren Ausführungsbeispiel ist die zusätzliche Sonnenblende 20 seitlich aus der Sonnenblende 10 herausziehbar.

Bei einem anderen Ausführungsbeispiel ist die zusätzliche Sonnenblende 20 um eine Außenkante der Sonnenblende 10 verschwenkbar. Die Schwenkbarkeit der Sonnenblende 10 und/oder der zusätzlichen Sonnenblende 20 ist einstellbar.

Ein anderes Ausführungsbeispiel sieht vor, daß die Schwenkbarkeit der Sonnenblende 10 und/oder der zusätzlichen Sonnenblende 20 automatisch erfolgt. Dabei kann vorgesehen werden, daß die Sonnenblende 10 und/oder die zusätzliche Sonnenblende 20 automatisch nach dem Sonnenstand ausgerichtet wird.

Bei einem Ausführungsbeispiel sind die Akkumulatoren der Sonnenblende 10 und/oder der zusätzlichen Sonnenblende 20 mit einem (in der Zeichnung nicht dargestellten) Stromverbraucher verbindbar. Dabei sind die Deckel 17, 27 für die Aussparungen 7, 21 zur Aufnahme eines Steckkontakts eines Verbrauchers ausgerüstet.

Ein weiteres Ausführungsbeispiel sieht vor, daß eine elektrische Verbindung zwischen an dem Rückfenster des Fahrzeugs auf Sonnenblenden angebrachten Solarzellen und den dort zugeordneten Akkumulatoren und/oder den Akkumulatoren der abnehmbaren Sonnenblenden 10, 20 vorgesehen ist. Eine am Rückfenster des Fahrzeugs angebrachte Sonnenblende müßte aber Lamellenform haben, um für den Fahrer eine Durchsicht zu gewährleisten.

Als Akkumulatoren werden zweckmäßigerweise an sich aus der DE-OS 27 44 325 bekannte Akkumulatoren geringen Gewichts verwendet, wie dies etwa eine Flachbatterie mit Kunststoff-Folien aus Polypyrrol und Lithium als Elektrodenmaterial unter Verwendung eines Gels darstellt. Eine solche Flachbatterie hat ferner den Vorzug geringer Umweltbelastung bei der Entsorgung (DE-OS 37 02 796). Die Akkumulatoren können Knopfzellenform haben.

**Patentansprüche**

1. Sonnenblende für Fahrzeuge mit an einem Endbereich ihres oberen Längsrandes angeordnetem Schwenklager und einer am anderen Endbereich desselben Längsrandes vorgesehenen Aussparung mit dieselbe querender Gegenlagerachse, die lösbar mit einer Halterungseinrichtung verbunden ist sowie mit einer Aussparung in der in heruntergeklappter Stellung nach innen gerichteten Seite der Sonnenblendenfläche eines flachen Bauteils, dadurch gekennzeichnet, daß die Sonnenblende (10) an ihrer in heruntergeklappter Stellung nach außen gerichteten Seite Solarmodule (16) aufweist, die mit mindestens einem, von den Solarmodulen (16) aufladbarem Akkumulator in der Aussparung (7) der Sonnenblenden-Innenseite elektrischn verbunden sind, und daß das Schwenklager (Zapfen 11) der Sonnenblende (10) im Fahrzeug einrastbar und aus diesem ausrastbar ausgebildet und angeordnet ist.

2. Sonnenblende nach Anpsruch 1, dadurch gekennzeichnet, daß die Sonnenblende (10) durch mindestens eine zusätzliche Sonnenblende (20) vergrößerbar ist, die an ihrer in Betriebsstellung nach außen gerichteten Seite Solarmodule (26) und an ihrer nach innen gerichteten Seite eine Aussparung (21) mit mindestens einem Akkumulator aufweist, der mit den Solarmodulen (26) an der nach außen gerichteten Seite der zusätzlichen Sonnenblende (20) elektrisch verbunden und mit dem Akkumulator bzw. Akkumulatoren der Sonnenblende (10) elektrisch verbindbar ist.

3. Sonnenblende nach einem der Ansprüche 1 oder 2, dadurch gekennzeichnet, daß die Solarmodule (16, 26) monokristalline Solarzellen aufweisen.

4. Sonnenblende nach einem der Ansprüche 1 oder 2, dadurch gekennzeichnet, daß die Solarmodule (16, 26) polykristalline Solarzellen aufweisen.

5. Sonnenblende nach einem der Ansprüche 1 oder 2, dadurch gekennzeichnet, daß die Solarmodule (16, 26) Dünnschicht-Solarmodule sind.

6. Sonnenblende nach Anspruch 2, dadurch gekennzeichnet, daß die zusätzliche Sonnenblende (20) aus der Sonnenblende (10) nach unten herausziehbar ist.

7. Sonnenblende nach Anspruch 2, dadurch gekennzeichnet, daß die zusätzliche Sonnenblende (20) aus der Sonnenblende (10) seitlich herausziehbar ist.

8. Sonnenblende nach einem der Ansprüche 2, 6 oder 7, dadurch gekennzeichnet, daß die zusätzliche Sonnenblende (20) um eine Außenkante der Sonnenblende (10) schwenkbar ist.

9. Sonnenblende nach Anspruch 8, dadurch gekennzeichnet, daß die Schwenkbarkeit der Sonnenblende (10) und/oder der zusätzlichen Sonnenblende (20) einstellbar ist.

10. Sonnenblende nach Anspruch 9, dadurch gekennzeichnet, daß die Schwenkbarkeit der Sonnenblende (10) und/oder der zusätzlichen Sonnenblende (20) so ausgebildet ist, daß sie automatisch erfolgt.

11. Sonnenblende nach Anspruch 10, dadurch gekennzeichnet, daß die automatische Schwenkbarkeit der Sonnenblende (10) und/oder der zusätzlichen Sonnenblende (20) so ausgebildet ist, daß sie auf den Sonnenstand ausgerichtet ist.

12. Sonnenblende nach einem der Ansprüche 1 bis 11, dadurch gekennzeichnet, daß die Akkumulatoren der Sonnenblende (10) und/oder der zusätzlichen Sonnenblende (20) mit einem Stromverbraucher elektrisch verbindbar sind.

13. Sonnenblende nach einem der Ansprüche 1 bis 12, dadurch gekennzeichnet, daß die Aussparungen (7, 21) für die Akkumulatoren jeweils einen Deckel (17, 27) zum staub- und feuchtigkeitsdichten Abschluß aufweisen.

14. Sonnenblende nach Abspruch 13, dadurch gekennzeichnet, daß die Deckel (17, 27) zur Aufnahme eines Steckkontakts eines Stromverbrauchers ausgerüstet sind.

15. Sonnenblende nach einem der Ansprüche 1 bis 14, dadurch gekennzeichnet, daß eine elektrische Verbindung zwischen an dem Rückfenster des Fahrzeugs auf Sonnenblenden angebrachten Solarzellen und den dort zugeordneten Akkumulatoren und/oder den Akkumulatoren der abnehmbaren Sonnenblenden (10, 20) vorgesehen ist.

16. Sonnenblende nach einem der Ansprüche 1 bis 15, dadurch gekennzeichnet, daß das Schwenklager der Sonnenblende (10) im Fahrzeug einen Zapfen (11) mit einer Ringnut (9) aufweist, in die federbelastete, im Fahrzeugrahmen festgehaltene Rastelemente (Kugeln 4, Ringfeder 5) einrasten.

17. Sonnenblende nach Anspruch 16, dadurch gekennzeichnet, daß die federbelasteten Rastelemente Kugeln (4) sind.

18. Sonnenblende nach einem der Ansprüche 1 bis 17, dadurch gekennzeichnet, daß die Sonnenblende (10, 20) aufwickelbar ist.

19. Sonnenblende nach Anspruch 18, dadurch gekennzeichnet, daß für die Sonnenblende (10, 20) eine Führung zu deren Unterbringung im Fahrzeughimmel vorgesehen ist.

20. Sonnenblende nach einem der Ansprüche 18 oder 19, dadurch gekennzeichnet, daß ein flexibles Trägermaterial lamellenartig mit Solarzellen bestückt ist.

21. Sonnenblende nach einem der Ansprüche 18 bis 20, dadurch gekennzeichnet, daß ein flexibles Trägermaterial durchgehend mit lichtabsorbierendem Überzug versehen ist.

**9 5 Fig.1**

11 12a 13 14

15

12b

15

12

10a 6

10

9 10d

10b 7

10c 8

22 20c

20

20b

21

**Fig.2** 10 16 20 26 27

17

20 20

20